# EUROPEAN PATENT SPECIFICATION

(11) **EP 3 961 910 B1**
(45) Date of publication and mention of the grant of the patent: **11.06.2025**
(21) Application number: 21186688.4
(22) Date of filing: 20.07.2021
(51) Int. Cl.: G01M 13/04, H02P 21/04, H02P 21/26

(54) **METHOD AND DEVICE OF CONDITION MONITORING**
VERFAHREN UND VORRICHTUNG ZUR ZUSTANDSÜBERWACHUNG
PROCÉDÉ ET DISPOSITIF DE SURVEILLANCE D'ÉTAT

(30) Priority: 27.08.2020 SE 2050992
(43) Date of publication of application: 02.03.2022
(73) Proprietor: IBC Control AB, 263 37 Höganäs (SE)
(72) Inventor: PERSSON, Christer, 263 52 Lerberget (SE)
(74) Representative: KIPA AB

(56) References cited:
- EP-A1- 3 376 665
- WO-A1-2006/029608
- DE-T5- 112017 005 650
- JP-A- 2017 181 437
- US-A1- 2019 003 928

## Description

### TECHNICAL FIELD

The invention concerns condition monitoring of a transmission part of rotating equipment such as a torque transmission part in a system between an electric motor and a load during operation.

### BACKGROUND

Traditionally condition monitoring of transmission parts of rotating equipment/machines is done by checking that the load is rotating, turning, or moving. This is usually done by means of one or more sensors reacting to one or more triggering devices. The triggering devices may be optical, physical, or wireless. Either the sensor(s) or the triggering device(s) are mounted on the load, thus the sensor(s) generating a signal every time they pass each other.

A disadvantage of such a system is that a part of the system has to be mounted on the load, possibly negatively impacting the system and/or the load as to reliability, accuracy, influence, etc. There seems to be room for improvement.

DE 11 2017 005 650 discloses a power transmission mechanism anomaly diagnosis device that comprises a monitoring and diagnosis unit for determining an anomaly in a power transmission mechanism, as well as a current detector connected to a power supply of an electric motor. The monitoring and diagnosis unit includes an analysis unit for analyzing the current transmitted by the current detector and an anomaly determination unit for determining an anomaly in the power transmission mechanism based on the analysis results from the analysis unit.

JP 2017-181437 discloses a rotary machine system abnormality detection method based on the operation time current signal of a three-phase induction motor, an abnormality monitoring method using the abnormality detection method, and an abnormality monitoring device using the abnormality monitoring method. This rotary machine system abnormality detection method carries out simple diagnosis that includes: a first step of executing high-speed Fourier transformation for the operation time current signal of a three-phase induction motor; a second step of calculating current spectrum peak values of one or both of side band waves by extracting, from acquired current spectrums, with a current spectrum peak of power supply frequency as the center, the side band waves of the current spectrum peaks of power supply frequencies present at frequency positions respectively separated to a low-frequency side and a high-frequency side by feature frequencies relating to the abnormality of a rotary machine system; a third step of calculating deterioration parameters of the rotary machine system from the current spectrum peak value of the side band waves and the power supply frequencies; and a fourth step of detecting the abnormality of the rotary machine system by recording the values of deterioration parameters and comparing them with a deterioration determination reference value.

### SUMMARY

An object of the invention is to define a condition monitoring method and device of a torque transfer part between an electrical motor and a load, without negatively influencing the load, the motor, or the system as such.

The present invention is defined by the appended claims only, in particular by the scope of appended independent claims. Reference(s) to "embodiments" throughout the description which are not under the scope of the appended claims merely represents possible exemplary executions and are therefore not part of the present invention.

The aforementioned object is achieved by a condition monitoring method and device that samples torque values, such as a Q-current in a FOC of an electric motor, in relation to motor rotor rotation. Thereafter performing a Fourier transformation of the sampled torque values/Q-current samples from a predefined number of motor rotor rotations for analysis to thereby determine the existence of load variations in sync with the rotation of the load or not. Theoretically there are perfect loads that do not induce load variation over a full turn of the load, however, in practice, loads, especially larger loads, will have some unbalance that can be detected by the torque variations needed to keep a constant rotational speed of the load. If there are no load variations correlated to the revolutions of the load, then it is determined that the torque transfer part is broken or otherwise damaged to properly transfer torque as intended.

The aforementioned object is also achieved according to the invention by a method of condition monitoring a torque transfer part by means of measuring torque values/Q current of a field oriented controlled electric motor. According to the invention the method further comprises measuring, Fourier transforming, analyzing, correlating and determining. Measuring involves measuring the torque values/Q-current in relation to a rotor of the electric motor for a predetermined number of turns of the rotor. Fourier transforming involves Fourier transforming measured torque/Q-current samples over the predetermined number of rotor turns. Analyzing involves analyzing the Fourier transformed content as to a condition of the torque transfer part by correlating the transformed content with a full revolution of the load. Finally, the determining involves determining the condition of the torque transfer part based on the analysis of the Fourier transformed content.

The aforementioned object is also achieved according to the invention by a method of condition monitoring a torque transmission part transferring torque between an electric motor and a load. The method comprises measuring a signal representative of a torque value of the electric motor. According to the invention the method further comprises a first step of determining, a second step of determining, a third step of Fourier transforming, a fourth step of analyzing and a fifth step of determining. The first step of determining, determines the torque value at a motor rotor position of the electric motor at a predetermined rotor revolution interval of the electric motor. The second step of determining then determines the torque value for a predetermined number of rotor revolutions of the electric motor. The third step of Fourier transforming, Fourier transforms the determined torque values for the predetermined number of rotor revolutions of the electric motor at the motor rotor position at the predetermined rotor revolution interval of the electric motor. Then in the fourth step of analyzing, analyzes the Fourier transformed content as to a condition of the torque transmission part. Then finally in the fifth step of determining, a condition of the torque transmission part is determined based on one or more analysis of one or more Fourier transformed content in the fourth step.

In some versions the method of condition monitoring is intended to function where the electric motor is controlled by a Field Oriented Controller (FOC). The signal representative of a torque value of the electric motor is then a Q-current signal of the Field Oriented Controller. Suitably the Field Oriented Controller is a sensorless Field Oriented Controller, which can then provide a signal representative of the motor rotor position. In other versions the method of condition monitoring is intended to function with only the parts of a sensorless Field Oriented Controller that generates a Q-current and a signal representative of the motor rotor position, and where the control of the electric motor is done in an alternative manner.

The determining of the torque value can suitably range from once every plurality of motor rotor revolutions to a plurality of torque value determining per motor rotor revolution. In some versions the number of determined torque values for the predetermined number of rotor revolutions, are 2^{N}, where N is an integer. Sometimes it is advantageous if sampling the torque value is done at a higher rate than the rate of determining the torque value, suitably then the determining of the torque value is based on an average of the sampled torque values done between determining the torque value.

The motor rotor position of where torque values are determined are suitably one or more predetermined intervals or motor rotor positions around a rotor rotation. Suitably the analyzing of the Fourier transformed content is done by looking at values at cycles corresponding to a load cycle, to see if there are torque variations. The fifth step of determining a condition of the torque transmission part is dependent on the existence or not of torque variations at a load cycle, one load rotation. If there are no load variations correlated to the revolutions of the load, then it is determined that the torque transfer part is broken or otherwise damaged to properly transfer torque as intended.

A load may be a rotating heat exchanger that is mainly used to recover energy from exhaust air and suitably configured to heat incoming colder air using the recovered energy. Such a load could rotate at a relatively slow speed, especially in relation to a rotational speed of an electric motor used to drive it. A load can alternatively be a part of a fan, a pump, a compressor, a driving drum of a conveyor belt system, an escalator, a centrifuge, an agitator system, a saw, a belt or rotary sander, a planer, a stone crusher, or other devices and systems comprising a rotating load or indirectly a linear load. A torque transmission part from an electric motor to a load, can be a belt, such as a round belt, a toothed belt, a flat transmission belt, a V-belt, a hexagonal transmission belt, a synchronous belt, or the like such as a chain.

The different additional enhancements of the method of condition monitoring a machine part according to the invention can be combined in any desired manner as long as no conflicting features are combined.

The aforementioned object is also achieved according to the invention by a condition monitoring device to monitor a condition of a torque transmission part transferring torque between an electric motor and a load. The device comprises a torque sampler that samples a signal representative of a torque value of the electric motor. According to the invention the torque sampler determines the torque value at a motor rotor position of the electric motor at a predetermined rotor revolution interval of the electric motor. The torque sampler further determines the torque value for a predetermined number of rotor revolutions of the electric motor. The condition monitoring device further comprises a signal processor, an analyzer and a decision unit. The signal processor is arranged to Fourier transform the determined torque values for the predetermined number of rotor revolutions of the electric motor at the motor rotor position or positions at the predetermined rotor revolution interval of the electric motor. The analyzer is then arranged to analyze the Fourier transformed content as to a condition of the torque transmission part. Finally, the decision unit is arranged to determine a condition of the torque transfer part based on one or more analysis of one or more Fourier transformed contents. If there are no load variations correlated to the revolutions of the load, then it is determined that the torque transfer part is broken or otherwise damaged to properly transfer torque as intended.

In some embodiments the device further is arranged to cooperate with an electric motor that is controlled by a Field Oriented Controller (FOC). The signal representative of a torque value of the electric motor is then a Q-current of the Field Oriented Controller. Suitably the Field Oriented Controller is a sensorless Field Oriented Controller, also providing a signal representative of the motor rotor position. In other embodiments the device only further comprises the parts of a sensorless Field Oriented Controller that generates a Q-current and a signal representative of the motor rotor position, and where the control of the electric motor is done in an alternative manner.

In some embodiments the torque sampler can suitably determine the torque value in different ranges from once every plurality of motor rotor revolutions to a plurality of torque value determinations per motor rotor revolution. Advantageously the number of determined torque values the torque sampler samples during the predetermined rotor revolutions, are 2^{N}, where N is an integer, to thereby facilitate the DFT/FFT that follows. In some embodiments the torque sampler samples the torque value at a higher rate than the rate of determining the torque value, the determining of the torque value is then suitably based on an average of the sampled torque values done between determining the torque value.

The positions/intervals around a motor rotor of where torque values are determined can be one or more predetermined positions/intervals around a rotor rotation. Suitably the analyzer analyzes the Fourier transformed content by looking at values at cycles corresponding to a load cycle, a load rotation, to see if there are torque variations or not. The decision unit can preferably determine a condition of the torque transmission part in dependence on the existence or not of torque variations at a load cycle.

A load may be a rotating heat exchanger. A rotating heat exchanger is mainly used to recover energy from exhaust air. The recovered energy is then used to heat incoming colder air. Such a load could rotate at a relatively slow speed, especially in relation to a rotational speed of an electric motor driving it. A load can alternatively be a part of a fan, a pump, a compressor, a driving drum of a conveyor belt system, an escalator, a centrifuge, an agitator system, a saw, a belt or rotary sander, a planer, a stone crusher, and other devices and systems comprising a rotating load or indirectly a linear load, and a torque transmission part from an electric motor to a load. A torque transmission part may be a belt, such as a round belt, a toothed belt, a flat transmission belt, a V-belt, a hexagonal transmission belt, a synchronous belt, or the like such as a chain.

The different additional enhancements of the condition monitoring device according to the invention can be combined in any desired manner as long as no conflicting features are combined.

Other advantages of this invention will become apparent from the detailed description.

### BRIEF DESCRIPTION OF THE DRAWINGS

The invention will now be described in more detail for explanatory, and in no sense limiting, purposes, with reference to the following figures, in which
- Fig. 1: illustrates a schematic diagram of the invention in use,
- Fig. 2: illustrates an example of a sensorless Field Oriented Control (FOC) for Permanent Magnet Synchronous Motors (PMSM) suitable to be used in some embodiments of the invention,
- Fig. 3: illustrates schematically a signal processing flow according to the invention,
- Fig. 4: illustrates a flowchart of the signal processing according to the invention,
- Fig. 5: illustrates a flowchart of a forced condition monitoring according to one embodiment according to the invention.

### DETAILED DESCRIPTION

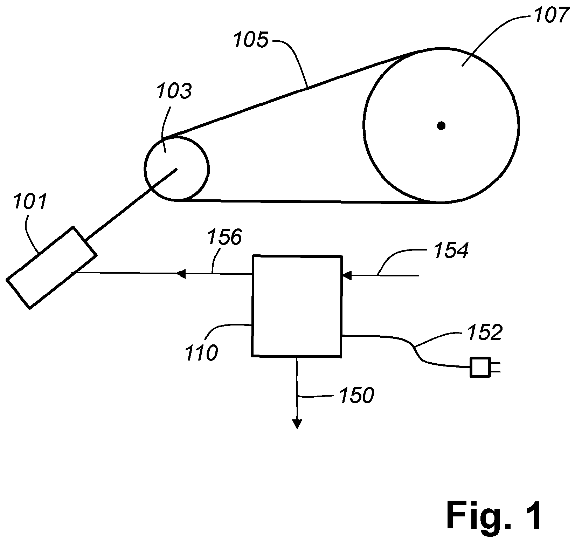

In order to clarify the method and device according to the invention, some examples of its use will now be described in connection with Figures 1 to 5.

Figure 1 illustrates a schematic diagram of the invention in use. The system comprises an electric motor 101, coupled with a belt pulley 103 and via a torque transmission part 105 coupled to a load 107. In this example the illustrated load 107 is a heat exchanger rotor in a rotary heat exchanger mainly used to recover energy from exhaust air and thereby heat incoming air. These rotate relatively slow and a relationship of 64:1 or more between motor rotor revolutions and load revolutions is not unusual. The load can also be a part of a fan, a pump, a compressor, a driving drum of a conveyor belt system, an escalator, a centrifuge, an agitator system, a saw, a belt or rotary sander, a planer, a stone crusher, and other devices and systems comprising a rotating load and/or indirectly a linear load. The load has to have some irregularity or be provided with one, that will cause/require torque variations from the electric motor to keep the load at a constant desired speed around a revolution/cycle of the load. The system is also suitable for very large loads that rotate relatively slow in relation to an electric motor driving the load. Large loads, such as larger heat exchanger rotors are relatively weak constructions in relation to their size, and are therefore very difficult to manufacture without unbalances and with perfect roundness. These imperfections will cause a motor controller to have to vary a torque to keep the imperfect load at a constant desired speed. These torque variations are repeated synchronously with the load cycle, one complete load revolution. The torque transmission part 105 can for example be a belt, a round belt, a toothed belt, a flat transmission belt, a V-belt, a hexagonal transmission belt, a synchronous belt, a chain, a toothed coupling, a direct coupling between the motor and the load or the like.

The electric motor 101 is driven by a control unit 110 by means of a motor drive output 156. In addition to an electric motor controller, the control unit also comprises a condition monitoring unit according to the invention. The condition monitoring unit monitors the condition of the torque transmission part 105 and provides a condition monitoring output 150 from the control unit. The condition monitoring output 150 can be an indicator light in addition to a connection with a supervisor system that will determine if the system should be shut down and an alarm given or not. This can also be completely or in part built into the condition monitoring unit. The condition monitoring unit is dependent on a signal representing the electric motor torque, which signal can be from a sensor or as in a preferred embodiment from an available Q-current signal from a preferred electric motor controller embodiment based on a sensorless Field Oriented Control (FOC). The control unit 110 further comprise a desired motor speed input 154 and a power input 152. A motor control using FOC needs a minimum rotational speed so that a sufficient back-emf is generated. This back-emf is necessary for FOC to properly function. Some implementations of the invention require that the electric motor is controllable also below the minimum rotational speed, and in such implementations the motor controller is able to switch between FOC and an alternative low RPM alternative such as traditional frequency controlled sinus waveforms.

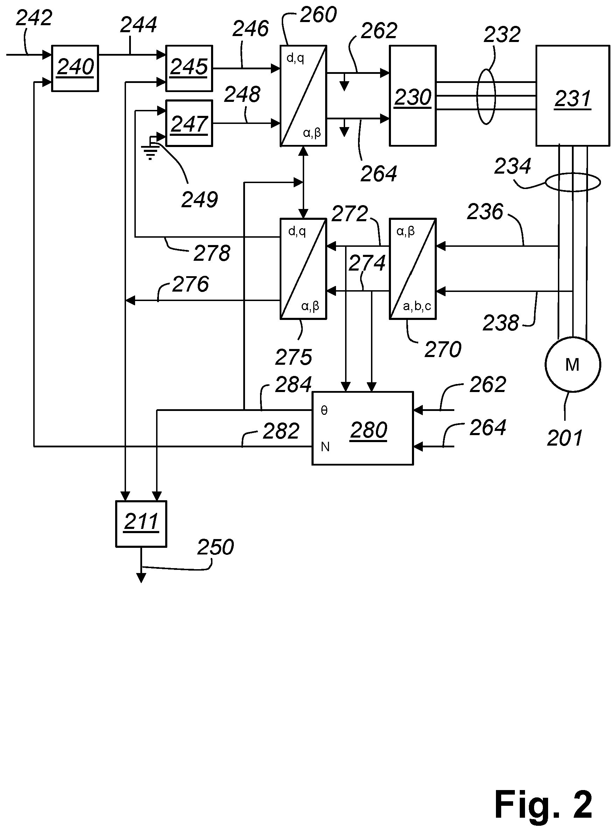

Figure 2 illustrates an example of a sensorless Field Oriented Control (FOC) for Permanent Magnet Synchronous Motors (PMSM) suitable to be used in some embodiments of the invention. The sensorless FOC can be seen as having a desired speed input 242 and a resulting three phase inverter 231 correctly driving 234 an electric motor 201 at that speed. Connected thereto is a control unit 211 that comprises a condition monitoring unit according to the invention. The condition monitoring unit in this case requires the Q-current 276 as a measure of the electric motor torque that is required to drive the load at the desired speed 242. The condition monitoring unit further requires the rotor position 284, to be able to sample the Q-current at the same position around the rotor of the motor 201. A sensorless FOC comprises a Position and Speed estimator 280 that uses V_{α} 262, V_{β} 264, i_{α} 272, and i_{β} 274, to be able to calculate rotor speed 282 and rotor position 284. The raw rotor position signal 284 that is provided is the electrical position that has to be converted to mechanical position, or at least taken into account. Further details about the different blocks can be found below and in other literature.

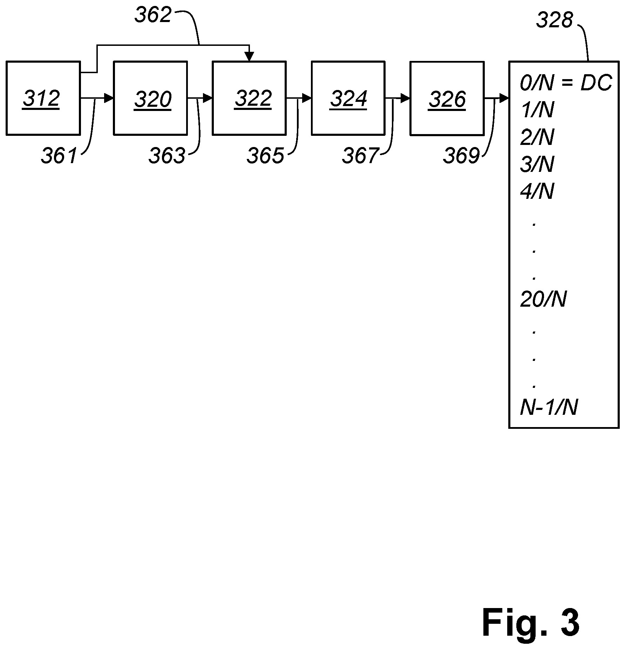

Figure 3 illustrates schematically a signal processing flow according to the invention. The signal processing needs both the motor rotor torque and the motor rotor position to be able to sample the torque in relation to the position of the motor rotor. A sensorless FOC control 312 is a suitable motor controller as it can both generate a torque related signal, a Q-current 361, and also the required rotor position 362. The Q-current 361 is then low pass filtered 320, generating a low pass filtered Q-current signal 363. Thereafter sampling and possibly down-sampling 322 of the torque/Q-current, depending on type of sampling, correlation of the sampling with the motor rotor rotations using the position signal 362. Individual samples 365 are then collected into a vector in the next stage 324. Sampling/down sampling 324 of a for the embodiment, adequate number of samples for an adequate number of motor rotor revolutions. In an example there is a rotational ratio of 64:1 between the motor and the load. The Q-current can then suitably be sampled twice per motor rotor revolution, for a total of 64 revolutions, thus resulting in 128 samples 367. The set of samples 367 are then put through a Fourier transformation 326 in relation to motor rotor position, thus making it speed independent. In the current example we would get a data set 369 of 64 data points representing frequency of load variations at different rotational ratios 328. The data points represent load variation frequencies at different rotational ratios in relationship to the motor rotor. The first gives a DC value, an average. The following are the rotational relationships to the motor rotor 1/N, 2/N, 3/N ..... (N-1)/N, where N is the number of data points. In our example we have 64 resulting data points. 1/N is then the frequency of load variations having a rotational relationship with the motor rotor as 1/64, which is one rotation of the load since the motor to load rotational relationship is 64:1 in this simplified example. What is looked for is if there are load variations having a repeatability equal to one cycle, one rotation, of the load. If there are load variations that have the same cycle as a load cycle, then there is a high probability that the torque transfer part works as it should mirroring back to the motor control any load variations during a revolution of the load. If there is a lack of load variations being cyclic with a load rotation/cycle, then there can be a cause for worry that the torque transfer part is completely or partially broken/damaged.

The motor to load relationship might be known and programmable/preprogrammed into the motor control/condition monitoring unit. In other implementation there might be an automatic or on demand seek function in the software that identifies the relationship. In still further embodiments the condition monitoring unit might be set up to accept a range of relationships between motor and load rotations, for example 200:1 to 10:1, thus examining a wider range of bins 328, resulting data points 369, to search for cyclic load variations.

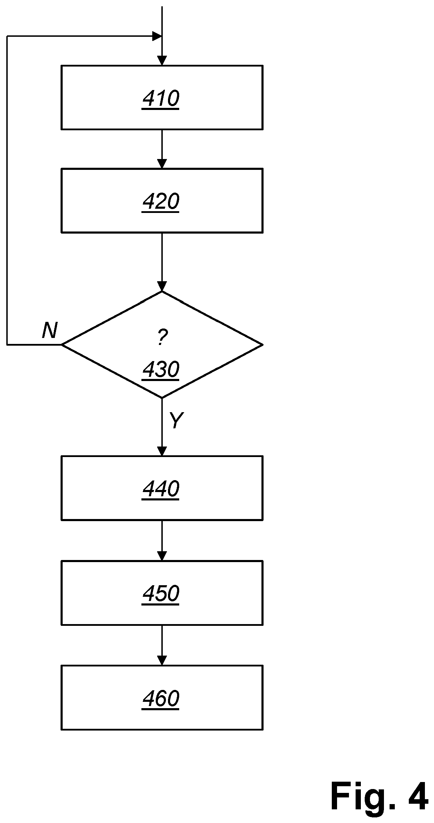

Figure 4 illustrates a more traditional flowchart of a signal processing flow according to the invention following the torque / Q-current. First there is a low pass filtering 410 of the Q-current. The Q-current is sampled 420 at determined motor rotor location(s)/position(s), this can be at one or more positions on a motor rotor rotation, or at one position every two or three motor rotor rotations. There has to be enough sampling done, this is tested 430. If there are not enough then process is returned to step 410. If there are enough samples then the process continues with step 440, that Fourier transforms the sampled set of Q-current samples. Suitably by at least DFT, preferably by FFT, or some other suitable method. When the Fourier transform has been done, then there is first an analysis 450 of the result of the FFT. This analysis is to find the relevant bins with an indication that there are torque variations appearing in relation to the load cycle, or multiples/divisions thereof. In a final step 460 there is a determination of the implications of the analysis 450 and suitably a communication of this to one or more users and/or to a database/further processing.

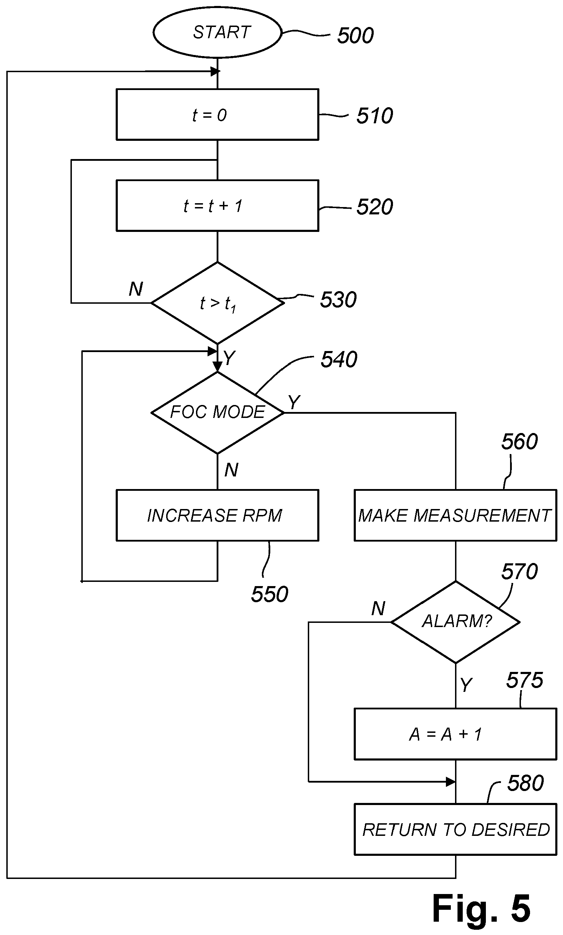

As mentioned previously, a FOC controlled electric motor cannot be regulated to very low RPM:s where there is not enough reverse EMF for the FOC to be able to function properly. If the condition monitoring is done in a sensorless FOC environment, then there cannot be any condition monitoring done if there is no Q-current to sample. Figure 5 illustrates a flowchart of forced condition monitoring according to one embodiment according to the invention. A forced condition monitoring is done when there has not been any condition monitoring done within a predetermined time interval. The process starts in a first step 500. Variables and timers are appropriately set and reset, such as timer t=0 in a second step 510. The timer t is increased after a predetermined time interval, t=t+1, in a third step 520. It is tested in a fourth step 530 if the timer value t is greater than a preset time t1. If no, then the process returns to the third step 520 to keep on increasing the timer t after the predetermined time interval. If the time t value is greater than a preset timer value t1, then the process continues with a fifth step 540. The fifth step 540 tests if the motor control is in FOC mode or in a in another mode, such as conventional frequency controlled sinus wave mode? If the motor control is in FOC mode, then torque, Q-current, is available and the process then continues with a seventh step 560. On the other hand, If the motor control is in another mode, such as a frequency controlled sinus wave mode, then the process will continue with step 550. Step 550 increases speed/motor rotor revolutions per minute for the purpose of forcing the motor control to enter FOC mode. After a motor speed increase the process goes back to step 540 to see if the motor control has entered FOC mode or if a further increase in motor speed is necessary.

Once it has been established that the motor control is in FOC mode, then a condition monitoring check is done with the help of the now available Q-current as a signal indicative of the motor torque in step 560. That is a condition monitoring of the torque transfer part is done by a complete measurement of Q-current during a predetermined number of motor rotor revolutions, FFT, analyzes and then a determination if the torque transmission part is functioning or not. If in step 570 it is determined that the torque transmission part is functioning, then the process will continue with step 580. If it is determined in step 570 that the torque transmission part is not functioning as expected, then the process continues with step 575. Step 575 keeps track of how many condition monitoring failures there are, if condition monitoring failures consecutive or if there are condition monitoring passes in-between, the time between failures etc. The decision process is in many embodiments handled elsewhere where it is determined if a shutdown is motivated or not depending many factors. In some embodiments these decisions are taken by pre-programmed routines in the condition monitoring unit. Finally, in step 580, the condition monitoring is finished for this time and the motor speed is returned to a set desired speed value and the process is then continued with step 510.

The invention is not restricted to the above-described embodiments, but may be varied within the scope of the following claims.

Figure 1 illustrates a schematic diagram of the invention in use:
- 101: An electric motor,
- 103: A belt pulley, toothed pulley, rubber wheel and the like coupled to the electric motor 101,
- 105: A torque transmission part from electric motor to a load, such as a belt, a toothed belt, a flat transmission belt, a V-belt, a hexagonal transmission belt, a synchronous belt, a chain, a toothed coupling, a direct coupling between the motor and the load or the like,
- 107: A load, such as a heat exchanger rotor in a rotary heat exchanger mainly used to recover energy from exhaust air and thereby heat incoming air, the load can also be a part of a fan, a pump, a compressor, a driving drum of a conveyor belt system, an escalator, a centrifuge, an agitator system, a saw, a belt or rotary sander, a planer, a stone crusher, and other devices and systems comprising a rotating load or indirectly a linear load,
- 110: A control unit comprising the condition monitoring unit according to the invention and an electric motor controller comprising an available Q-current, in a user friendly embodiment the control unit comprises power input, a desired speed input, a motor drive output, and a condition monitoring output,
- 150: A condition monitoring output from the control unit,
- 152: A power input to the control unit,
- 154: A desired motor speed input to the control unit,
- 156: A motor drive output from the control unit.

Figure 2 illustrates an example of a sensorless Field Oriented Control (FOC) for Permanent Magnet Synchronous Motors (PMSM) suitable to be used in some embodiments of the invention:
- 201: An electric motor,
- 211: A control unit comprising the condition monitoring unit according to the invention, inputs are calculated speed 242 and Q current, i_{q}, and the output is condition monitoring,
- 230: A Pulse Width Modulation (PWM) unit for motor control,
- 231: A three phase inverter,
- 232: Control signals from PWM to the three phase inverter,
- 234: Drive connections to the electric motor,
- 236: Measurement of iₐ, from the drive connections to the electric motor,
- 238: Measurement of i_{b}, from the drive connections to the electric motor, with two known, iₐ and i_{b}, then the third i_{c} can be calculated,
- 240: A speed PID controller, inputs are the desired speed 242 and the speed 242 as calculated in this embodiment, output iₐ the desired i_{q} (desired Q current) 244,
- 242: A desired speed,
- 243: D current, i_{d}, PID controller, inputs are desired i_{d} 249, that is set to zero, and a measured i_{d} 278, an output is V_{d} 248,
- 244: A desired Q current, i_{q},
- 245: A Q-current, i_{q}, PID controller, inputs are a desired i_{q} 244 and a measured i_{q} 276, output is V_{q} 246,
- 246: V_{q},
- 248: V_{d},
- 249: A desired D current, i_{d}, which is set to zero in some embodiments as the one shown, in some embodiments a small amount of D current gives some torque margins and can contribute to stabilize the motor,
- 250: A condition monitoring output from the control unit,
- 260: An inverse Park transformation, from V_{q} and V_{d}, to V_{α} and V_{β}, inputs are V_{q} 246, V_{d} 248 and rotor position 284, outputs V_{α} 262 and V_{β} 264,
- 262: V_{α},
- 264: V_{β},
- 270: A Clarke transformation, inputs are iₐ 236 and i_{b} 238, outputs are i_{α} 272 and i_{β} 274,
- 272: i_{α},
- 274: i_{β},
- 275: A Park transformation, inputs are i_{α} 272, i_{β} 274 and rotor position 284, outputs are i_{d} 278 and i_{q} 276
- 276: i_{q},
- 278: i_{d},
- 280: Position and Speed estimator, inputs V_{α} 262, V_{β} 264, i_{α} 272, and i_{β} 274, outputs are calculated speed 282 and calculated rotor position 284,
- 282: Calculated speed,
- 284: Calculated rotor position.

Figure 3 illustrates schematically a signal processing flow according to the invention:
- 312: Suitably a sensorless FOC control generating a Q-current,
- 320: Low pass filtering of the Q-current,
- 322: Sampling and possibly down-sampling of Q-current, depending on type of sampling, correlation of the sampling with the motor rotor rotations using a rotor position signal,
- 324: Sampling/down sampling of a for the embodiment, adequate number of samples for an adequate number of motor rotor revolutions, for example two samples per revolution, for 64 revolutions,
- 326: Fourier transform, such as FFT, DFT or similar Fourier transformation,
- 328: Binning and analysis of the result of the FFT,
- 361: Q-current,
- 362: motor rotor position,
- 363: Filtered Q-current,
- 365: Q-current samples,
- 367: Q-current samples ready for Fourier transformation,
- 369: Result of Fourier transform, frequency of load variations.

Figure 4 illustrates a flowchart of a signal processing flow according to the invention:
- 410: Low pass filtering of Q-current,
- 420: Sampling of Q-current,
- 430: Is there enough samples been acquired over enough motor rotor rotations for the FFT of the current embodiment?? If No, then return to 410, if Yes, then continue with 440,
- 440: Fourier transform, such as FFT, DFT or similar Fourier transform,
- 450: Analysis of the result of the FFT,
- 460: Determination of the implications of the analysis and communication of this to one or more users and/or to a database/further processing.

Figure 5 illustrates a flowchart of forced condition monitoring according to one embodiment according to the invention:
- 500: Start
- 510: Reset timer t=0,
- 520: Increase timer t=t+1,
- 530: Is the timer value t greater than a preset time t₁? If No, then return to step 520 to keep on increasing the timer t, if Yes, then continue with step 540,
- 540: Is the motor control in FOC mode or in a sinus mode? If in FOC mode, then continue with step 560, If in sinus mode, then continue with step 550,
- 550: Increase speed/motor rotor revolutions per minute, then go to step 540,
- 560: Make a complete measurement of Q-current during a predetermined number of motor rotor revolutions, FFT, analyzed and determine if the torque transmission part is functioning or not,
- 570: Is it determined that the torque transmission part is functioning, then continue with step 580, If it is determined that the torque transmission part is not functioning as expected, continue with step 575,
- 575: Add one to the alarm count, this is handled elsewhere where it is determined if a shutdown is motivated or not depending on the alarm count within a predetermined time interval and/or if a predetermined number of consecutive alarms is determined,
- 580: The condition monitoring is finished for this time and the motor speed is returned to the desired speed value and the process is continued with step 510.

## Claims

1. A method of condition monitoring a torque transmission part (105) transferring torque between an electric motor (101) and a load (107), the method comprises measuring a signal representative of a torque value of the electric motor (101), determining the torque value at a position along a motor rotor of the electric motor (101) at a predetermined rotor revolution interval of the electric motor (101),
**characterized in**
**that** the method further comprises:
- determining the torque value for a predetermined number of rotor revolutions of the electric motor (101),
- Fourier transforming the determined torque values in relation to the motor rotor position for the predetermined number of rotor revolutions of the electric motor (101) at the position along the motor rotor at the predetermined rotor revolution interval of the electric motor (101),
- analyzing the Fourier transformed content as to a condition of the torque transmission part (105),
- determining a condition of the torque transmission part (105) based on one or more analysis of one or more Fourier transformed content, and
wherein the analyzing of the Fourier transformed content is done by looking at values at cycles corresponding to a load cycle, to see if there are torque variations.

2. The method of condition monitoring according to claim 1, wherein a load (107) is a rotating heat exchanger mainly used to recover energy from exhaust air and thereby heat incoming colder air, such a load could rotate at a slow speed in relation to a rotational speed of an electric motor (101), and wherein a torque transmission part (105) from an electric motor (101) to a load (107), comprises one of a belt, a round belt, a toothed belt, a flat transmission belt, a V-belt, a hexagonal transmission belt, a synchronous belt, a chain, or the like.

3. The method of condition monitoring according to claim 1 or 2, wherein the electric motor (101) is controlled by a Field Oriented Controller (FOC) and that the signal representative of a torque value of the electric motor (101) is a Q-current of the Field Oriented Controller, and/or where the Field Oriented Controller is a sensorless Field Oriented Controller, providing a signal representative of the motor rotor position.

4. The method of condition monitoring according to any one of claim 1 to 3, wherein the determining of the torque value ranges from once every plurality of motor rotor revolutions to a plurality of torque value determining per motor rotor revolution, and/or where the determined torque values for the predetermined number of rotor revolutions, are 2^{N}, where N is an integer.

5. The method of condition monitoring according to any previous claim, wherein sampling the torque value is done at a rate higher rate than the rate of determining the torque value, the determining of the torque value is based on an average of the sampled torque values done between determining the torque value, and/or where the position along the motor rotor of where torque values are determined are one or more predetermined intervals or positions along the motor rotor around the rotor.

6. The method of condition monitoring according to any previous claim, wherein determining that if there are no torque variations correlated to the load cycles, then the torque transfer part is broken or otherwise damaged to properly transfer torque as intended.

7. The method of condition monitoring according to any previous claim, wherein the determining a condition of the torque transmission part (105) is dependent on the existence of torque variations at a load cycle.

8. A condition monitoring device to monitor a condition of a torque transmission part (105) transferring torque between an electric motor (101) and a load (107), the device comprising a torque sampler, sampling a signal representative of a torque value of the electric motor (101),
**characterized in**
**that** the torque sampler is arranged to determine the torque value at a motor rotor position of the electric motor (101) at a predetermined rotor revolution interval of the electric motor (101), and where the torque sampler further is adapted to determine the torque value for a predetermined number of rotor revolutions of the electric motor(101), and in that the condition monitoring device further comprises:
- a signal processor arranged to Fourier transform the determined torque values in relation to the motor rotor position for the predetermined number of rotor revolutions of the electric motor (101) at the motor rotor position or positions at the predetermined rotor revolution interval of the electric motor (101),
- an analyzer arranged to analyze the Fourier transformed content as to a condition of the torque transmission part (105),
- a decision unit arranged to determine a condition of the torque transfer part based on one or more analysis of one or more Fourier transformed content
wherein the analyzer analyzes the Fourier transformed content by looking at values at cycles corresponding to a load cycle.

9. The condition monitoring device according to claim 8, wherein a load (107) is a rotating heat exchanger mainly used to recover energy from exhaust air and thereby heat incoming colder air, such a load could rotate at a slow speed in relation to a rotational speed of an electric motor (101), and wherein a torque transmission part (105) from an electric motor (101) to a load (107), comprises one of a belt, a round belt, a toothed belt, a flat transmission belt, a V-belt, a hexagonal transmission belt, a synchronous belt, a chain, or the like.

10. The condition monitoring device according to claim 8 or 9, wherein the electric motor (101) is arranged to be controlled by a Field Oriented Controller (FOC) and that the signal representative of a torque value of the electric motor (101) is a Q-current of the Field Oriented Controller, and/or the Field Oriented Controller is a sensorless Field Oriented Controller, providing a signal representative of the motor rotor position.

11. The condition monitoring device according to any one of claim 8 to 10, wherein the torque sampler is arranged to determine the torque value in ranges from once every plurality of motor rotor revolutions to a plurality of torque value determinations per motor rotor revolution, and/or the determined torque values for the predetermined number of rotor revolutions, are 2^{N}, where N is an integer.

12. The condition monitoring device according to any one of claims 8 to 11, wherein the torque sampler is arranged to sample the torque value at a higher rate than the rate of determining the torque value, the determining of the torque value is based on an average of the sampled torque values done between determining the torque value.

13. The condition monitoring device according to any one of claims 8 to 12, wherein the position along the motor rotor of where torque values are determined are one or more predetermined intervals or motor rotor positions around a rotor rotation.

14. The condition monitoring device according to any one of claims 8 to 13, wherein the decision unit is arranged to determine a condition of the torque transmission part (105) in dependence on the existence of torque variations at a load cycle.

15. The condition monitoring device according to any of the claims 8 to 14, wherein the decision unit is arranged to determine that if there are no torque variations correlated to the load cycles, then the torque transfer part is broken or otherwise damaged to properly transfer torque as intended.

## Patentansprüche

1. Verfahren zur Zustandsüberwachung eines Drehmomentübertragungsteils (105), das ein Drehmoment zwischen einem Elektromotor (101) und einer Last (107) überträgt, wobei das Verfahren Folgendes umfasst: Messen eines Signals, das einem Drehmomentwert des Elektromotors (101) entspricht, Bestimmen des Drehmomentwertes an einer Position entlang eines Motorrotors des Elektromotors (101) bei einem vorgegebenen Rotorumdrehungsintervall des Elektromotors (101), mit der Eigenschaft,
dass das Verfahren ferner Folgendes umfasst:
- Bestimmen des Drehmomentwertes für eine vorgegebene Anzahl von Rotorumdrehungen des Elektromotors (101),
- Fourier-Transformation der bestimmten Drehmomentwerte in Bezug auf die Rotorposition des Motors für die vorgegebene Anzahl von Rotorumdrehungen des Elektromotors (101) an der Position entlang des Motorrotors beim vorgegebenen Rotorumdrehungsintervall des Elektromotors (101),
- Analysieren des durch Fourier-Transformation erhaltenen Inhalts in Bezug auf den Zustand des Drehmomentübertragungsteils (105),
- Bestimmen eines Zustands des Drehmomentübertragungsteils (105) auf der Grundlage einer oder mehreren Analysen eines oder mehrerer durch Fourier-Transformation erhaltenen Inhalts, und
wobei die Analyse des durch Fourier-Transformation erhaltenen Inhalts anhand der Betrachtung von Werten bei Zyklen erfolgt, die einem Lastzyklus entsprechen, um festzustellen, ob Drehmomentabweichungen vorhanden sind

2. Verfahren zur Zustandsüberwachung nach Anspruch 1, wobei die Last (107) ein rotierender Wärmetauscher ist, der hauptsächlich zur Energeirückgewinnung aus Abluft dient, um eintretende kältere Luft zu erwärmen, wobei eine solche Last sich mit einer langsameren Geschwindigkeit im Vergleich zur Drehzahl eines Elektromotors (101) drehen kann, und wobei ein Drehmomentübertragungsteil (105) zwischen einem Elektromotor (101) und einer Last (107) eines der folgenden Elemente umfasst:
einen Riemen, einen Rundriemen, einen Zahnriemen, einen Flachriemen, einen Keilriemen, einen Sechskantriemen, einen Synchronriemen, eine Kette oder dergleichen.

3. Verfahren zur Zustandsüberwachung nach Anspruch 1 oder 2, wobei der Elektromotor (101) mittels eines feldorientierten Reglers (FOC - Field Oriented Controller) gesteuert wird. Das Signal, das einem Drehmomentwert des Elektromotors (101) entspricht, ist ein Q-Strom des feldorientierten Reglers und/oder der feldorientierte Regler ist ein sensorloser feldorientierter Regler, der ein Signal liefert, das der Rotorposition des Motors entspricht.

4. Verfahren zur Zustandsüberwachung nach einem der Ansprüche 1 bis 3, wobei die Bestimmung des Drehmomentwerts in einem Bereich von einmal pro einer Vielzahl von Motorrotorumdrehungen bis zu einer Vielzahl von Drehmomentwertbestimmungen pro Motorrotorumdrehung liegt und/oder wobei die bestimmten Drehmomentwerte für die vorgegebene Anzahl von Rotorumdrehungen 2^N betragen, wobei N eine ganze Zahl ist.

5. Verfahren zur Zustandsüberwachung nach einem der vorhergehenden Ansprüche, wobei die Abtastung des Drehmomentwertes mit einer höheren Rate erfolgt als die Rate zur Bestimmung des Drehmomentwertes und die Bestimmung des Drehmomentwertes auf einem Mittelwert der abgetasteten Drehmomentwerte bei der Bestimmung des Drehmomentwertes basiert und/oder wobei die Position entlang des Motorrotors, an der die Drehmomentwerte bestimmt werden, einem oder mehreren vorbestimmten Intervallen oder Positionen entlang des Motorrotors um den Rotor herum entspricht.

6. Verfahren zur Zustandsüberwachung nach einem der vorhergehenden Ansprüche, bei denen festgestellt wird, dass, wenn keine Drehmomentschwankungen mit den Lastzyklen in Zusammenhang stehen, das Drehmomentübertragungsteil defekt oder anderweitig beschädigt ist und das Drehmoment nicht wie vorgesehen übertragen kann.

7. Verfahren zur Zustandsüberwachung nach einem der vorhergehenden Ansprüche, wobei die Bestimmung eines Zustands des Drehmomentübertragungsteils (105) von der Existenz von Drehmomentabweichungen bei einem Lastzyklus abhängig ist.

8. Vorrichtung zur Zustandsüberwachung eines Drehmomentübertragungsteils (105), das ein Drehmoment zwischen einem Elektromotor (101) und einer Last (107) überträgt, wobei die Vorrichtung ein Signal abtastet, das einem Drehmomentwert des Elektromotors (101) entspricht
mit der Eigenschaft,
dass der Drehmomentwert an einer Rotorposition des Elektromotors (101) bei einem vorgegebenen Rotorumdrehungsintervall des Elektromotors (101) bzw. und für eine vorgegebene Anzahl von Rotorumdrehungen des Elektromotors (101) bestimmt wird, und dass die Zustandsüberwachungsvorrichtung ferner Folgendes umfasst:
- einen Signalbearbeiter, der dazu eingerichtet ist, die bestimmten Drehmomentwerte in Bezug auf die Rotorposition des Elektromotors (101) für die vorgegebene Anzahl von Rotorumdrehungen des Elektromotors (101) einer Fourier-Transformation zu unterziehen,
- ein Analysegerät für die Analyse des durch Fourier-Transformation erhaltenen Inhalts hinsichtlich eines Zustands des Drehmomentübertragungsteils (105),
- eine Bestimmungseinheit zur Bestimmung des Zustands des Drehmomentübertragungsteils aufgrund einer oder mehrerer Analysen eines oder mehrerer durch Fourier-Transformation erhaltenen Inhalte zu bestimmen,
wobei das Analysegerät den durch Fourier-Transformation erhaltenen Inhalt analysiert, indem er Werte bei Zyklen untersucht, die einem Lastzyklus entsprechen.

9. Vorrichtung zur Zustandsüberwachung nach Anspruch 8, wobei die Last (107) ein rotierender Wärmetauscher ist, der hauptsächlich zur Energeirückgewinnung aus Abluft dient, um eintretende kältere Luft zu erwärmen, wobei eine solche Last sich mit einer langsameren Geschwindigkeit im Vergleich zur Drehzahl eines Elektromotors (101) drehen kann, und wobei ein Drehmomentübertragungsteil (105) zwischen einem Elektromotor (101) und einer Last (107) eines der folgenden Elemente umfasst:
einen Riemen, einen Rundriemen, einen Zahnriemen, einen Flachriemen, einen Keilriemen, einen Sechskantriemen, einen Synchronriemen, eine Kette oder dergleichen.

10. Vorrichtung zur Zustandsüberwachung nach Anspruch 8 oder 9, wobei der Elektromotor (101) mittels eines feldorientierten Reglers (FOC) gesteuert wird. Das Signal, das einem Drehmomentwert des Elektromotors (101) entspricht, ist ein Q-Strom des feldorientierten Reglers und/oder der feldorientierte Regler ist ein sensorloser feldorientierter Regler, der ein Signal liefert, das der Rotorposition des Motors entspricht.

11. Vorrichtung zur Zustandsüberwachung nach einem der Ansprüche 8 bis 10, wobei die Bestimmung des Drehmomentwerts in einem Bereich von einmal pro einer Vielzahl von Motorrotorumdrehungen bis zu einer Vielzahl von Drehmomentwertbestimmungen pro Motorrotorumdrehung liegt und/oder wobei die bestimmten Drehmomentwerte für die vorgegebene Anzahl von Rotorumdrehungen 2^N betragen, wobei N eine ganze Zahl ist.

12. Vorrichtung zur Zustandsüberwachung nach einem der Ansprüche 8 bis 11, wobei die Abtastung des Drehmomentwertes mit einer höheren Rate erfolgt als die Rate zur Bestimmung des Drehmomentwertes und die Bestimmung des Drehmomentwertes auf einem Mittelwert der abgetasteten Drehmomentwerte bei der Bestimmung des Drehmomentwertes basiert.

13. Zustandsüberwachungsvorrichtung nach einem der Ansprüche 8 bis 12, wobei die Position entlang des Motorrotors, an der die Drehmomentwerte bestimmt werden, einem oder mehreren vorbestimmten Intervallen oder Positionen entlang des Motorrotors um den Rotor herum entspricht.

14. Zustandsüberwachungsvorrichtung nach einem der Ansprüche 8 bis 13, wobei die Bestimmung eines Zustands des Drehmomentübertragungsteils (105) von der Existenz von Drehmomentabweichungen bei einem Lastzyklus abhängig ist.

15. Zustandsüberwachungsvorrichtung nach einem der Ansprüche 8 bis 14, bei denen festgestellt wird, dass, wenn keine Drehmomentschwankungen mit den Lastzyklen in Zusammenhang stehen, das Drehmomentübertragungsteil defekt oder anderweitig beschädigt ist und das Drehmoment nicht wie vorgesehen übertragen kann.

## Revendications

1. Procédé de surveillance d'état d'une partie de transmission de couple (105) transférant un couple entre un moteur électrique (101) et une charge (107), le procédé comprend le fait de mesurer un signal représentatif d'une valeur de couple du moteur électrique (101), le fait de déterminer la valeur de couple à une position le long d'un rotor de moteur du moteur électrique (101) à un intervalle de révolution de rotor prédéterminé du moteur électrique (101), **caractérisé en ce**
**que** le procédé comprend en outre :
- le fait de déterminer la valeur de couple pour un nombre prédéterminé de révolutions de rotor du moteur électrique (101),
- le fait d'appliquer une transformée de Fourier aux valeurs de couple déterminées par rapport à la position de rotor de moteur pour le nombre prédéterminé de révolutions de rotor du moteur électrique (101) à la position le long du rotor de moteur à l'intervalle de révolution de rotor prédéterminé du moteur électrique (101),
- le fait d'analyser la valeur obtenue après transformée de Fourier quant à un état de la partie de transmission de couple (105),
- le fait de déterminer un état de la partie de transmission de couple (105) sur la base d'une ou plusieurs analyses d'une ou plusieurs valeurs obtenues après transformée de Fourier, et
où l'analyse de la valeur obtenue après transformée de Fourier est réalisée en examinant des valeurs au cours de cycles correspondant à un cycle de charge, pour voir s'il y a des variations de couple.

2. Procédé de surveillance d'état selon la revendication 1, dans lequel une charge (107) est un échangeur thermique rotatif principalement utilisé pour récupérer de l'énergie d'air évacué et chauffer ainsi de l'air entrant plus froid, de telle sorte qu'une charge pourrait tourner à une faible vitesse par rapport à une vitesse de rotation d'un moteur électrique (101), et où une partie de transmission de couple (105) d'un moteur électrique (101) à une charge (107) comprend l'une d'une courroie, d'une courroie ronde, d'une courroie crantée, d'une courroie de transmission plate, d'une courroie en V, d'une courroie de transmission hexagonale, d'une courroie synchrone, d'une chaîne, ou autres.

3. Procédé de surveillance d'état selon la revendication 1 ou 2, dans lequel le moteur électrique (101) est commandé par une commande à flux orienté (FOC) et le signal représentatif d'une valeur de couple du moteur électrique (101) est un courant Q de la commande à flux orienté, et/ou où la commande à flux orienté est une commande à flux orienté sans capteur, fournissant un signal représentatif de la position de rotor de moteur.

4. Procédé de surveillance d'état selon l'une quelconque des revendications 1 à 3, dans lequel la détermination de la valeur de couple va d'une fois à chaque pluralité de révolutions de rotor de moteur à une pluralité de déterminations de valeur de couple par révolution de rotor de moteur, et/ou où les valeurs de couple déterminées pour le nombre prédéterminé de révolutions de rotor sont de 2^{N}, où N est un entier.

5. Procédé de surveillance d'état selon l'une quelconque des revendications précédentes, dans lequel un échantillonnage de la valeur de couple est effectué à une fréquence supérieure à la fréquence de détermination de la valeur de couple, la détermination de la valeur de couple est fondée sur une moyenne des valeurs de couple échantillonnées faite entre déterminations de la valeur de couple, et/ou où la position le long du rotor de moteur où les valeurs de couple sont déterminées est un ou plusieurs intervalles prédéterminés ou positions prédéterminées le long du rotor de moteur autour du rotor.

6. Procédé de surveillance d'état selon l'une quelconque des revendications précédentes, comprenant le fait de déterminer que s'il n'y a pas de variations de couple corrélées aux cycles de charge, alors la partie de transfert de charge est cassée ou endommagée d'une autre façon l'empêchant de correctement transférer un couple comme prévu.

7. Procédé de surveillance d'état selon l'une quelconque des revendications précédentes, dans lequel la détermination d'un état de la partie de transmission de couple (105) dépend de l'existence de variations de couple au cours d'un cycle de charge.

8. Dispositif de surveillance d'état destiné à surveiller un état d'une partie de transmission de couple (105) transférant un couple entre un moteur électrique (101) et une charge (107), le dispositif comprenant un échantillonneur de couple, échantillonnant un signal représentatif d'une valeur de couple du moteur électrique (101),
**caractérisé en**
**ce que** l'échantillonneur de couple est agencé pour déterminer la valeur de couple à une position de rotor de moteur du moteur électrique (101) à un intervalle de révolution de rotor prédéterminé du moteur électrique (101), et où l'échantillonneur de couple est en outre conçu pour déterminer la valeur de couple pour un nombre prédéterminé de révolutions de rotor du moteur électrique (101), et **en ce que** le dispositif de surveillance d'état comprend en outre :
- un processeur de signal agencé pour appliquer une transformée de Fourier aux valeurs de couple déterminées par rapport à la position de rotor de moteur pour le nombre prédéterminé de révolutions de rotor du moteur électrique (101) à la position ou aux positions de rotor de moteur à l'intervalle de révolution de rotor prédéterminé du moteur électrique (101),
- un analyseur agencé pour analyser la valeur obtenue après transformée de Fourier quant à un état de la partie de transmission de couple (105),
- une unité décisionnelle agencée pour déterminer un état de la partie de transfert de couple sur la base d'une ou plusieurs analyses d'une ou plusieurs valeurs obtenues après transformée de Fourier,
où l'analyseur analyse la valeur obtenue après transformée de Fourier en examinant des valeurs au cours de cycles correspondant à un cycle de charge.

9. Dispositif de surveillance d'état selon la revendication 8, dans lequel une charge (107) est un échangeur thermique rotatif principalement utilisé pour récupérer de l'énergie d'air évacué et chauffer ainsi de l'air entrant plus froid, de telle sorte qu'une charge pourrait tourner à une faible vitesse par rapport à une vitesse de rotation d'un moteur électrique (101), et où une partie de transmission de couple (105) d'un moteur électrique (101) à une charge (107) comprend l'une d'une courroie, d'une courroie ronde, d'une courroie crantée, d'une courroie de transmission plate, d'une courroie en V, d'une courroie de transmission hexagonale, d'une courroie synchrone, d'une chaîne, ou autres.

10. Dispositif de surveillance d'état selon la revendication 8 ou 9, dans lequel le moteur électrique (101) est agencé pour être commandé par une commande à flux orienté (FOC) et le signal représentatif d'une valeur de couple du moteur électrique (101) est un courant Q de la commande à flux orienté, et/ou la commande à flux orienté est une commande à flux orienté sans capteur, fournissant un signal représentatif de la position de rotor de moteur.

11. Dispositif de surveillance d'état selon l'une quelconque des revendications 8 à 10, dans lequel l'échantillonneur de couple est agencé pour déterminer la valeur de couple dans des plages allant d'une fois à chaque pluralité de révolutions de rotor de moteur à une pluralité de déterminations de valeur de couple par révolution de rotor de moteur, et/ou où les valeurs de couple déterminées pour le nombre prédéterminé de révolutions de rotor sont de 2^{N}, où N est un entier.

12. Dispositif de surveillance d'état selon l'une quelconque des revendications 8 à 11, dans lequel l'échantillonneur de couple est agencé pour échantillonner la valeur de couple à une fréquence supérieure à la fréquence de détermination de la valeur de couple, la détermination de la valeur de couple est fondée sur une moyenne des valeurs de couple échantillonnées faite entre déterminations de la valeur de couple.

13. Dispositif de surveillance d'état selon l'une quelconque des revendications 8 à 12, dans lequel la position le long du rotor de moteur où les valeurs de couple sont déterminées est un ou plusieurs intervalles prédéterminés ou positions prédéterminées de rotor de moteur autour d'une rotation du rotor.

14. Dispositif de surveillance d'état selon l'une quelconque des revendications 8 à 13, dans lequel l'unité décisionnelle est agencée pour déterminer un état de la partie de transmission de couple (105) en fonction de l'existence de variations de couple au cours d'un cycle de charge.

15. Dispositif de surveillance d'état selon l'une quelconque des revendications 8 à 14, dans lequel l'unité décisionnelle est agencée pour déterminer que s'il n'y a pas de variations de couple corrélées aux cycles de charge, alors la partie de transfert de charge est cassée ou endommagée d'une autre façon l'empêchant de correctement transférer un couple comme prévu.
